# EUROPEAN PATENT SPECIFICATION

(11) **EP 1 399 887 B1**
(45) Date of publication and mention of the grant of the patent: **02.01.2008**
(21) Application number: 02740917.6
(22) Date of filing: 26.06.2002
(51) Int. Cl.: G06T 5/10

(54) **THREE-DIMENSIONAL IMAGING OF SINGLE PARTICLES**
DREIDIMENSIONALE ABBILDUNG VON EINZELNEN TEILCHEN
REPRESENTATION TRIDIMENSIONNELLE DE PARTICULES UNIQUES

(30) Priority: 27.06.2001 GB 0115714
(43) Date of publication of application: 24.03.2004
(73) Proprietor: IMPERIAL COLLEGE INNOVATIONS LIMITED CAMR, London SW7 2AZ (US)
(72) Inventor: VAN HEEL, Marin, Gerard, Teddington TW11 9QX (GB)
(74) Representative: Phillips, Emily Elizabeth
(86) International application number: PCT/GB2002/002970
(87) International publication number: WO 2003/003302

(56) References cited:
- M. VAN HEEL: "Do Single (Ribosome) Molecules Phase Themselves?" COLD SPRING HARBOR SYMPOSIA ON QUANTITATIVE BIOLOGY, VOLUME LXVI, COLD SPRING HARBOR LABORATORY PRESS, 2001, PROCEEDINGS OF THE 66TH COLD SPRING HARBOR SYMPOSIUM ON QUANTITATIVE BIOLOGY, 31 May 2001 (2001-05-31) - 5 June 2001 (2001-06-05), XP001106129
- M. VAN HEEL, B. GOWEN, R. MATADEEN, E.V. ORLOVA, R. FINN, T. PAPE, D. COHEN, H. STARK, R. SCHMIDT, M. SCHATZ, A. PATWARDHAN: "Single-Particle Electron Cryo-Microscopy: Towards Atomic Resolution" QUARTERLY REVIEWS OF BIOPHYSICS, vol. 33, no. 4, 2000, pages 307-369, XP001106808 cited in the application
- B.-C. WANG: "Resolution of Phase Ambiguity in Macromolecular Crystallography" METHODS IN ENZYMOLOGY, PART B, EDITED BY H. W. WYCKOFF, C.H.W. HIRS, S.N. TIMASHEFF, vol. 115, 1985, XP001106130 cited in the application
- ROBERTS A. L. U. , BRÜNGER A. T.: "Phase Improvement by Cross-Validated Density Modification" ACTA CRYSTALLOGRAPHICA, vol. D51, 1995, pages 990-1002, XP001105971
- CORNEA-HASEGAN M. A. ET AL.: "Phase Refinement and Extension by Means of Non-crystallographic Symmetry Averaging using Parallel Computers" ACTA CRYST., vol. D51, 1995, pages 749-759, XP001105973

## Description

This invention relates to the field of three-dimensional imaging of objects, such as, for example, biological molecules by single-particle electron microscopy. '

Single particle cryo-EM is a developing field. At the 5-10Å resolution levels that can now be achieved routinely, α helices can be visualised in proteins and sometimes even β sheets. The picturing of amino-acid side chains or nucleic-acid bases, however, has remained beyond reach. The current situation in cryo-EM of large biomolecular assemblies is thus reminiscent of the early days of protein crystallography when the α helices of myoglobin and hemoglobin first became visible. High-resolution electron microscopy of biological materials had been hampered since the invention of the instrument by the harsh high-vacuum environment and the ionising electron radiation, which make the samples decay as soon as they are illuminated. In the early nineteen eighties, Jacques Dubochet and his group at the EMBL in Heidelberg brought the "cryo-EM" specimen preparation technique to maturity [Dubochet *et al.,* 1988]. A thin layer of solution, for example spanning a small hole in a carbon foil, is rapidly cooled to liquid nitrogen temperatures by freeze-plunging into cooled liquid ethane which causes the solution to solidify into a vitreous phase of water which for all practical considerations behaves just like water. This technique brought the first well-preserved images of, for example, viruses in their native hydrated state [Adrian *et al.* 1984].

For calculating three-dimensional (3D) structures based on the molecule images in the sample, good and efficient algorithms are required in combination with powerful computers. The development of computational techniques required for processing electron microscopical images started mainly in the Cambridge research group around Aaron Klug [DeRosier & Klug, 1968; Crowther, 1971] some thirty years ago. The techniques allow the calculation of the structures of icosahedral viruses to resolution levels of 7Å-9Å [Conway *et al.,* 1997; Böttcher *et al.,* 1997] and more recently even to 5.9Å [van Heel *et al.,* 2000] or even 4.5Å (work in progress). The highest resolution hitherto achieved for an entirely symmetrical structure is 7.5Å for the 50S large ribosomal subunit of *E. coli* [Matadeen *et al.,* 1999]. When compared to X-ray crystallography, one unsurpassed strength of the single-particle cryo-EM approach is its ability to image different functional states of biological complexes such as the ribosome [Stark *et al.,* 1997a, 1997b, Beckmann *et al.,* 1997], without having to resort to extensive crystallization experiments. X-ray crystallography, on the other hand, excels in yielding atomic resolution structures such as the spectacular recent structures of the large [Ban *et al.,* 2000] and the small ribosomal subunits [Wimberly *et al.* 2000; Schluenzen *et al.,* 2000], respectively. Electron microscopy has yielded atomic-resolution structures based on images of 2D crystals [Henderson 1990]. However, only a handful of structures have been solved by electron crystallography for the lack of good crystals. It would be strongly desirable to produce atomic-resolution structures based on single-particle images alone.

It is not the microscope that limits the achievable resolution. Modern field-emission gun electron microscopes operating with an acceleration voltage of 200-300kV and equipped with a stage that can hold the sample at liquid nitrogen or even at liquid helium temperatures, produce images of stable anorganic samples with information beyond 2Å [Zemlin, *et al.,* 1996]. The cooling helps keeping biological molecules intact during the data collection. The tolerable exposure levels for biological macromolecules, however, remain - by some three orders of magnitude - lower than what would be needed to directly see ~3Å information in the images. Achieving high-resolution structures of biological materials is a battle against noise, and requires the averaging of large numbers of extremely noisy molecular images (cf. [Van Heel *et al.,* 2000]).

The main problem in achieving high-resolution results is that we cannot afford to look at the molecules before collecting the molecular images and we thus cannot focus the images. The high-resolution phases in the molecular images oscillate rapidly with changing defocus and the main problem in single-particle cryo-EM is to average the high-frequency information coherently, in spite of the wild phase fluctuations within the extremely noisy data set It is not simple to precisely determine the defocus parameters for each area of the micrograph. Apart from this lack of precision, the size of the particles and thickness of the ice layer result in an intrinsic uncertainty in the determining of the defocus parameters in the data. The net effect of this uncertainty is a smearing out of the high-frequency image details ("defocus envelope" [Van Heel *et al.*, 2000]). The effects of defocus variations within a particle are also known as the effects of the "curvature of the Ewald sphere" [DeRosier, 2000].

M. VAN HEEL, B. GOWAN, R. MATADEEN, E.V. ORLOVA, R. FINN, T. PAPE, D. COHEN, H. STARK, R. SCHMIDT, M. SCHATZ, A. PATWARDHAN: "Single-Particle Electron Cryo-Microscopy: Towards Atomic Resolution" QUARTERLY REVIEWS OF BIOPHYSICS, vol. 33, no. 4, 2000, pages 307-369 discloses single particle imaging techniques using electron microscopy.

M.A. CORNEA-HASEGAN ET AL.: "Phase Refinement and Extension by Means of Non-crystallographic Symmetry Averaging Using Parallel Computers", ACTA CRYST. D51, 1995, pages 749 to 759 discloses solvent flattening used for X-ray crystallography.

Roberts A.L.U., Brunger A.T.: "Phase Improvement by Cross-Validated Density Modification" ACTA CRYSTALLOGRAPHICA, vol. D51, 1995, pages 990-1002, XP001105971 discloses that solvent flattening is a useful constraint for the early stages of crystallographic structure determination.

Viewed from one aspect the present invention provides a method of creating a three-dimensional image of a single-particle object comprising the steps of: observing projection images of said object to form source image data; transforming said source image data to the frequency domain to form source image amplitude information and source image phase information; applying a mask defined by mask information to a working image of said object within a reconstruction volume in the spatial domain to remove portions of said working image outside of said mask, said mask corresponding to an estimated three-dimensional outline of said object and said reconstruction volume having a maximum size unconstrained by said object; transforming said masked working image to the frequency domain to form generated amplitude and phase information representing said masked working image; merging said source image amplitude information with said generated phase information to form an updated working image in the frequency domain; transforming said updated working image back to said reconstruction volume within the spatial domain; and repeating said applying and subsequent steps upon said updated working image until convergence criteria are met; wherein said mask is formed by identifying those portions of said working image having a local variance within a relevant spatial frequency range and above a threshold level.

The invention applies an iterative solvent-flattening approach to forming an image to yield surprisingly good results. A way of constructing the mask, which is suitable for automatic use, is one in which the mask is formed by identifying those portions of the image having a local variance within a spatial frequency range above a threshold level.

The present techniques are particularly suitable for determining the three-dimensional structure of macromolecules and macromolecular complexes for use in, for example, the field of drug discovery, e.g. how do pharmaceuticals dock onto target macromolecules and macromolecular assemblies.

The proposed technique achieves very high resolution by exploiting the fact that the amplitude information of the two-dimensional projection images of the object is not corrupted by the phase changes due to the Contrast Transfer Function [van Heel 2000].

The invention is particularly well suited to use with electron microscopy. Electron microscopy is potentially able to produce high resolution images, but suffers from the disadvantage that it is a harsh imaging technology to apply to delicate biological samples and accordingly the samples cannot be observed (and accordingly the apparatus focused) before the images are taken without destroying those samples. Accordingly, many effectively out of focus images can be obtained and the present technique used to analyse such images in order to generate a higher resolution image in which the phase information has at least to some extent been recovered.

In the context of electron microscopy, the technique is particularly well suited to imaging objects embedded within the vitreous phase of a fluid, such as water.

The techniques are also well suited to distributed computing techniques.

Other aspects of the invention provide an apparatus operating in accordance with the above techniques and a computer program product bearing a computer program for controlling a computer in accordance with the above techniques.

An embodiment of the invention will now be described, by way of example only, with reference with the accompanying drawings in which:

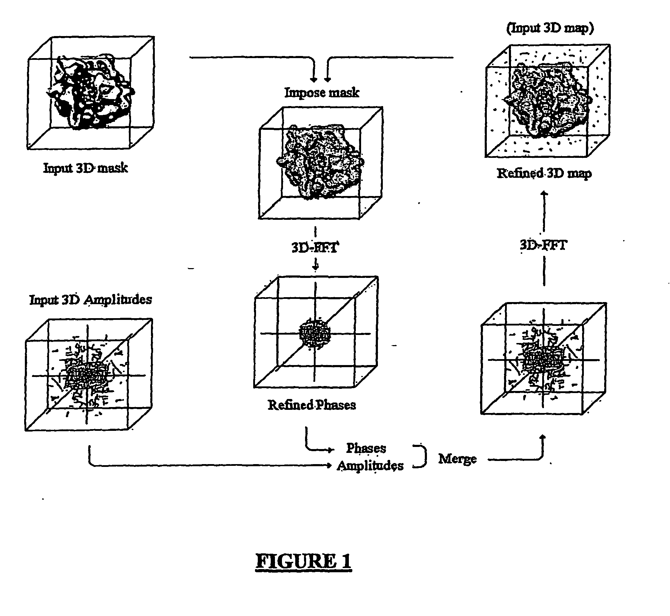

Figure 1 schematically illustrates an imaging process;
Figures 2 to 8 illustrate example images and associated curves indicative of properties of those images; and
Figure 9 is a diagram schematically illustrating the architecture of a general purpose computer which may be used to embody the present techniques.

One key technique allowing us to continuously improve the resolution of the results is multivariate statistical data compression and classification [van Heel & Frank 1981; van Heel 1984, 1989, van Heel *et al.,* 2000]. These pattern recognition techniques allow in spite of the extreme noise levels - discrimination between molecular images in slightly different orientations or at slightly different defocus conditions. One can normally only assign Euler orientations (by "angular reconstitution" [van Heel, 1987]) after the noise reduction achieved by averaging the members of the various classes. While increasing resolution toward structures that are interpretable in terms of their atomic co-ordinates (better than ~3.5Å), there is benefit in seeking to adopt the data refinement techniques in use in X-ray crystallography to particle imaging.

In X-ray crystallography the direct observables are the diffraction amplitudes of the crystals, since the relative phases of the diffraction peaks are lost upon the registration of the diffraction patterns ("phase problem") which phases must subsequently be retrieved by various techniques including the classical use of heavy-metal derivatives. In single-particle cryo-EM, in contrast, the observables are projection *images* of the macromolecules, which observations, although very noisy, include both amplitude and phase information.

X-ray crystallographic solvent flattening exploits the fact that outside the molecule there should be only the unstructured density of the solvent within the crystal. Thus, it is justified to exploit such *a priori* knowledge by setting the electron densities outside the known molecular envelope to zero. After Fourier transforming the modified real-space densities to Fourier space, the complex structure factors can be refined by combining the experimental (or calculated) amplitudes with phases modified by the imposed real-space constraints. The process is applied iteratively to refine the phases of the structure factors in Fourier space [Wang B-C 1985; Abrahams & Leslie 1996]

Described in Appendix I is an adaptation of this principle to single particle imaging.

As the starting point of this discussion, it is assumed that a standard 3D reconstruction based on a large number (O [10000] - O [10000000]) of noisy molecular images has already been performed. In particular, it is assumed that an at least approximate correction of the contrast transfer function ("CTF") has been achieved such that the molecular information is no longer spread over an environment of the individual molecules but becomes concentrated within the particle boundary [van Heel *et al.,* 2000]. Thus, once a (preliminary) 3D reconstruction is available it can be stated with some certainty what are the 3D boundaries of the molecular complex under study, and thus a 3D mask enclosing the whole structure may be defined. An algorithm is provided that generates a 3D mask by finding areas in the 3D volume that have a local variance (in the relevant spatial frequency ranges) significantly higher than that of the background.

As a first example a 3D reconstruction of the large ribosomal subunit of *E. coli* [Matadeen *et al.,* 1999] is used as a test object for elucidating the properties of single solvent flattening procedures (See Appendix 2). Thus, all of the amplitude components of the 3D reconstruction, the 3D mask around the molecule, and the low-frequency phase components of the map are used as inputs to the procedure. In the case of this asymmetrical molecule, the procedure is capable of extending the phases to statistical significance up to ~2 times the sharp cut-off level imposed on the original phases by the low-pass filtering with a sharp spherical Fourier-space mask (Appendix 2). This experiment shows that it is possible in cryo-EM, to extend the phases to high resolution, provided one has reliable amplitudes available beyond the extent of the experimental phases.

This type of experiment may be pushed a step further by attempting a 3D reconstruction of the D6-symmetric giant worm hemoglobin of *Lumbricus terrestris* (cf. [Van Heel, *et al.* 2000]) (See Appendix 3). Rather than starting the iterations using the phases from a low-pass filtered map, this example starts with a 3D volume containing densities generated entirely by a random-number generator, and then imposes D6 symmetry on this "map". The results show that the phases of the original structure are restored with an astonishing precision. The imposing of D6 symmetry are repeated regularly during the iterative solvent-flattening procedures and this improves the convergence of the overall solvent-flattening process.

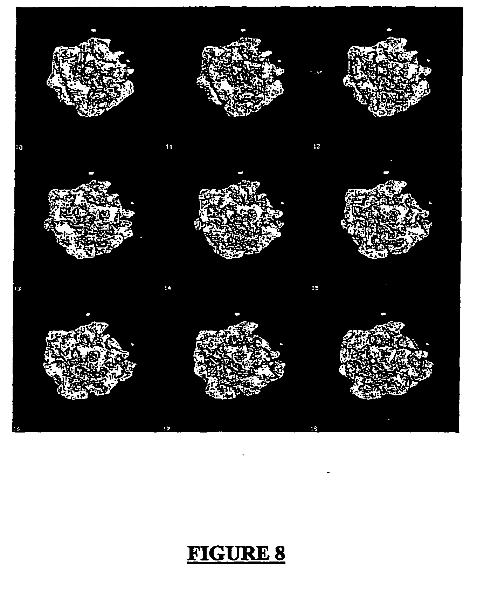

The newest results (Appendix 4, Figure 8) show that it is also possible to generate correct phases, for an entirely asymmetrical particle like the ribosome, starting with experimental amplitudes and initial phases derived from a three-dimensional volume with densities generated by random-number-generator.

The two techniques (programs) needed in these examples for applying solvent-flattening procedures (cf. [Wang B-C 1985; Abrahams & Leslie 1996]) are an automatic masking program, which defines where to find the object of interest inside the reconstruction volume, and a program that will go through the actual single-particle solvent-flattening (SPSF) procedures as depicted in Appendix 1. (The new single-particle programs may be implemented in the IMAGIC software system [van Heel *et al.,* 1996]). The automatic masking program is based on determining the local variance in a 3D environment of each point ("voxel") in the reconstruction volume, whereby only the variances in relevant frequency ranges are considered (publication in preparation). This is similar to an earlier algorithm aimed at detecting objects in noisy images [van Heel, 1982]. One interesting observation is that typically only about 10-15% of the typical reconstruction volume actually contains the molecule of interest. The tendency is to place the two-dimensional molecular images in frame that, in terms of available area, covers about four times the area occupied by the molecular projection; as a consequence, only ~1/8^{th} of the 3D reconstruction volume will be filled.

As a consequence of the volume only being only 1/8^{th} filled, in Fourier space, the amplitude and phase information will be correlated over the environment of ~8 voxels around each Fourier-space voxel (the correlation volume is the reciprocal of the relative volume filled by the object). In X-ray crystallography, the higher the solvent content of the crystals, the better the solvent-flattening phase refinements will work. In single-particle cryo-EM, as large a box as desired may be placed around the particles of interest and thus the "solvent content" may be made as high as wanted, thus extending the Fourier-space correlation volume at will. Indeed, in the first experimental results (Appendix 4), the entire three-dimensional image was itself embedded in a volume of 8 times the volume of the three-dimensional image. Thus the ribosome was embedded in a "solvent" almost 64 times the volume of the ribosome. As was to be expected, such a high solvent to molecule volume ratio improves the convergence of the solvent-flattening procedure. Following the X-ray crystallographic traditions, the solvent-flattening procedures start with the low-resolution end of Fourier space and slowly include the high-resolution information. The increase in the Fourier space radius, per iteration of the algorithm, is chosen small such that they remain approximately within the correlation volume.

While applying the new programs for single-particle solvent flattening on cryo-EM test data (See Appendix 2 and Appendix 3), it was difficult to be prepared for the surprising quality of the results: reconstruction can be made of the structure of biological macromolecules using (almost) only the amplitudes of the molecular images and (almost) ignoring their phases. In the 50S ribosomal subunit test (Appendix 2), the increase of about a factor of two in resolution achieved by the solvent-flattening procedures corresponds to an about eight-fold (2³) increase in information content and this level of improvement in clearly reflected in the results. Since in the worm hemoglobin example (Appendix 3) none of the original phases were used, the increase in information content (as defined by the FSC) is phenomenal. These observations are somewhat counter-intuitive, given the attention normally given to synchronising the high-resolution phases in the data. The first experimental results indicate that the approach (Appendix 4) will have a significant impact in practice.

Single-particle solvent flattening is an altogether new technique. Various parameters may control convergence. With the tests conducted so far, one aspect that emerged is that the performance may be even better for molecules with high pointgroup symmetries. The worm hemoglobin used here as an example has D6 pointgroup symmetry, and it converged towards a solution much more quickly than the entirely asymmetric 50S ribosomal subunit In particular, the D6 symmetry could be re-imposed after a number of solvent-flattening iteration cycles and that symmetrisation led to a better convergence of the high frequency components. In contrast, the asymmetrical ribosome in the course of the iterations tended to slowly drift against the edges of the mask leading to increased errors both within the reconstruction mask and in the power diverted into the solvent area (the areas outside the mask) during the iterations. However, with the implementation of better convergence parameters, such problems tend to disappear. One technique for improving convergence was adapted from X-ray crystallographic solvent flattening: instead of setting the solvent areas (outside the mask) to zero during each iteration, convergence improves if the new outside density is set to minus a fraction of the density found at that position prior to the imposing of the mask. A number of new convergence parameters and strategies were also found to be useful. For example, in the frequency domain, we not only have the phases of the three-dimensional object available, but also its amplitudes. Rather than just replacing those amplitudes by the input experimental amplitudes, it is advantageous for the convergence of the procedures to include a fraction of the difference between the experimental and the calculated amplitudes. The degree to which one includes the calculated amplitudes can be made a function of various convergence criteria. Useful criteria were found to be curves calculated as function of the distance to the origin in the frequency domain (Fourier space) with the character of "R-factor" (a standard measure in X-ray crystallography), "Fourier-Shell-Correlation" [FSC: Harauz & van Heel, 1986], Amplitude-spectrum, and of Information. These curves are mostly calculated between measure and computed amplitudes (R-factor), or between different iterations of the refined reconstructions (FSC, Information)).

A completely different school of thinking must be mentioned here. A whole body of publications exists discussing to what extent the complex wave front behind an object is fully determined by the image plane and diffraction plane amplitudes (cf. [Saxton 1978]). Solvent flattening algorithms can be seen as a special case of such procedures. It has been known for some time [Sayre, 1952; Szöke, 2001], that the phase problem in X-ray crystallography is a consequence of the "critical sampling" of the diffraction pattern that could in principle be overcome if information from between the diffraction spots were available. In recent theoretical calculations the possible application of future free-electron lasers were considered for collecting diffraction patterns of single molecules which would then be phased by "oversampling" [Neutze *et al.,* 2000]. Indeed, in a recent computer experiment, Miao *et al.* [Miao *et al.,* 2000] have shown that it is possible to reconstruct the structure of a rubisco monomer from simulated single particle X-ray diffraction patterns alone.

There is an intimate relationship between the single-particle solvent flattening procedures proposed above and the theoretical single-particle diffraction experiments even though the philosophy is a bit different The image information to be used in the SPSF approach is available today, whereas the first X-ray lasers have yet to be constructed. Various refinement approaches have yet to be implemented and it will take some time to digest all the practical and theoretical details of the procedures. For example, what kind of information is represented by the real-space mask/envelope? It clearly represents shape information about the object which is phase information. The better the resolution of a preliminary 3D reconstruction, the better we can define the mask and that influences the quality of the phase extension by solvent flattening. Also, the handedness of the mask information directly makes the reconstructions converge towards the correct handedness, in spite of the fact that the correct and the mirrored 3D maps are equally compatible with the amplitudes. The mask, for the time being, will be the result of a "conventional" single-particle 3D reconstruction and thus of conventionally determined phases. It is probably more appropriate to think of the SPSF procedures as phase extension procedures, rather than as entirely "ab initio" phasing approaches. It appears nevertheless quite likely that the SPSF cryo-EM approaches will prove more powerful than their X-ray crystallographic predecessors.

In the first examples given above the answer was known to begin with, and the exercise was to retrieve the answer after ignoring all high-resolution phases or the phases altogether. A real gain, however, comes from the fact that it is much simpler to determine the high-resolution amplitudes from the molecular images in the micrographs, than it is to achieve a perfect synchronization of their high-resolution phases. To determine the high-resolution phases of single particle data we must find the perfect (translational) alignment between the molecular images and we must precisely determine their individual defocus parameters as discussed above. The last example given above - that of the 70S Ribosomal functional complex (and Appendix 4 Figure 8), is an example of the successful application of the technique with real experimental data. The new techniques, exploiting the amplitudes of the high-resolution image data, may lead to significant improvements in resolution in single-particle cryo-EM. The procedures may be implemented in real space as a 3D reconstruction of the 3D auto correlation function (ACF) or of the 3D self correlation function (SCF) [van Heel *et al.* 1992] of the molecules, or, equivalently, in Fourier space by assembling the 3D intensity or amplitude spectrum of the particles. Since there already exist cryo-EM structures at ~5-7Å resolution, with the additional resolution boost from the SPSF approaches, single cryo-EM to atomic resolution may soon be possible.

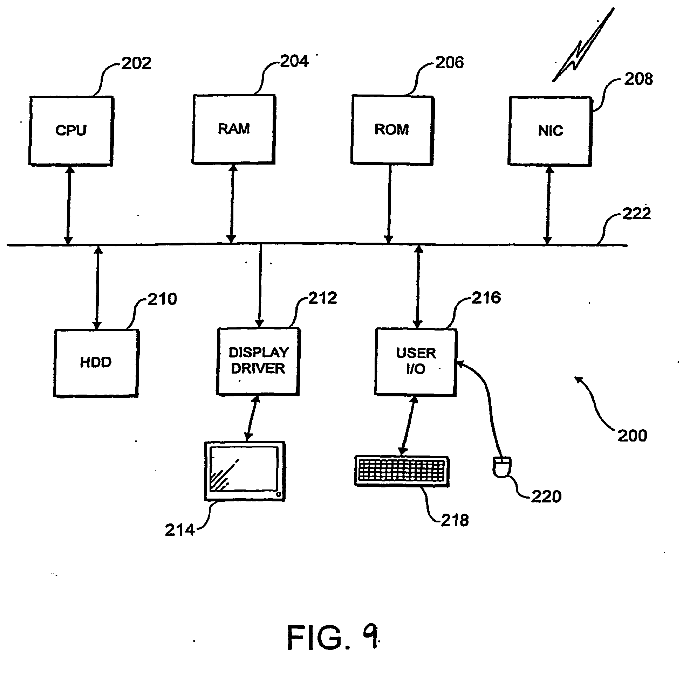

Figure 9 schematically illustrates a general purpose computer 200 of the type that may be used to implement the above described techniques. The general purpose computer 200 includes a central processing unit 202, a random access memory 204, a read only memory 206, a network interface card 208, a hard disk drive 210, a display driver 212 and monitor 214 and a user input/output circuit 216 with a keyboard 218 and mouse 220 all connected via a common bus 222. In operation the central processing unit 202 will execute computer program instructions that may be stored in one or more of the random access memory 204, the read only memory 206 and the hard disk drive 210 or dynamically downloaded via the network interface card 208. The results of the processing performed may be displayed to a user via the display driver 212 and the monitor 214. User inputs for controlling the operation of the general purpose computer 200 may be received via the user input output circuit 216 from the keyboard 218 or the mouse 220. It will be appreciated that the computer program could be written in a variety of different computer languages. The computer program may be stored and distributed on a recording medium or dynamically downloaded to the general purpose computer 200. When operating under control of an appropriate computer program, the general purpose computer 200 can perform the above described techniques and can be considered to form an apparatus for performing the above described technique. The architecture of the general purpose computer 200 could vary considerably and Figure 9 is only one example.

### References

Abrahams JP and Leslie AWG: Methods used in the structure determination of Bovine mitochondrial F1 ATPase. Acta Crystallogr. D52 (1996) 30-42.
Adrian M, Dubochet J, Lepault J, & McDowall AW. Cryo-electron microscopy of viruses. Nature 308 (1984) 32-36.
Beckmann R, Bubeck D, Grassucci R, Penczek P, Verschoor A, Blobel G, Frank J: Alignment of conduits for the nascent polypeptide chain in the ribosome-Sec61 complex. Science 278 (1997) 2123-2126.
Böttcher B, Wynne SA, Crowther RA: Determination of the fold of the core protein of hepatitis B virus by electron cryomicroscopy. Nature 386 (1997) 88-91.
Conway J, Cheng N, Wingfield PT, Stahl SJ, Steven AC: Visualisation of a 4-helix bundle in the hepatitis B virus capsid by cryo-electron microscopy. Nature 385 (1997) 91-94.
Crowther RA: Procedures for three-dimensional reconstruction of spherical viruses by Fourier synthesis from electron micrographs. Phil. Trans. Roy. Soc. Lond B 261 (1971) 221-230.
DeRosier DJ, Klug A: Reconstruction of three-dimensional structures from electron micrographs. Nature 217 (1968) 130-134.
DeRosier DJ: Correction of high-resolution data for curvature of the Ewald sphere. Ultramicroscopy 81 (2000) 83-98.
Böttcher B, Wynne SA, Crowther RA: Determination of the fold of the core protein of hepatitis B virus by electron cryomicroscopy. Nature 386 (1997) 88-91.
Dubochet J, Adrian M, Chang J-J, Homo J-C, Lepault J, McDowall A, Schultz P: Cryo-electron microscopy of vitrified specimens. Quart. Rev. Biophys. 21 (1988) 129-228.
Harauz G, van Heel M: Exact filters for general geometry three-dimensional reconstruction, Optik 73 (1986) 146-156.
Henderson R, Baldwin JM, Ceska TA, Zemlin F, Beckmann E, Downing KH:. Model for the structure of bacteriorhodopsin based on high-resolution electron cryomicroscopy. J. Mol. Biol. 213 (1990) 899-929.
Matadeen R, Patwardhan A, Gowen B, Orlova EV, Pape T, Mueller F, Brimacombe R, van Heel M: The E. Coli large ribosomal subunit at 7.5Å resolution. Structure 7 (1999) 1575-1583.
Miao J, Hodgson, K.O., Sayre, D.: An approach to three-dimensional structures of biomolecules by using single-molecule diffraction images. PNAS 98 (2001) 6641-6645.
Neutze R, Wouts R, van der Spoel D, Weckert E, Hajdu, J: Potential for biomolecular imaging with femtosecond X-ray pulses. Nature 406 (2000) 752-757.
Orlova EV, Dube P, Harris JR, Beckman E, Zemlin F, Markl J, van Heel M, Structure of Keyhole Limpet Hemocyanin Type 1 (KLH1) at 15Å resolution by electron cryomicroscopy and angular reconstitution, J. Mol. BioL 271 (1997) 417-437.
Saxton WO: Computer techniques for image processing in electron microscopy Academic Press, New York (1978)
Sayre D: The squaring method: A new method for phase determination, Acta Cryst. 5 (1952) 843-843.
Szöke A: Diffraction of partially coherent X-rays and the crystallographic phase problem. Act. Crystallogr. A 57 (2001) in 586.
Stark H, Orlova EV, Rinke-Appel J, Jünke N, Mueller F, Rodnina M, Wintermeyer W, Brimacombe R, van Heel M: Arrangement of tRNAs in pre- and post-translocational ribosomes revealed by electron cryomicroscopy. Cell 88 (1997) 19-28.
Stark H, Rodnina MV, Rinke-Appel J, Brimacombe R, Wintermeyer W, van Heel M: Visualisation of elongation factor Tu on the Escherichia coli ribosome. Nature 389 (1977) 403-406.
Van Heel M, Frank J: Use of multivariate statistics in analysing the images of biological macromolecules, Ultramicroscopy 6 (1981) 187-194.
Van Heel M: Detection of objects in quantum noise limited images, Ultramicroscopy 8 (1982) 331-342.
Van Heel M: Multivariate statistical classification of noisy images (randomly oriented biological macromolecules), Ultramicroscopy 13 (1984) 165-183.
Van Heel M: Angular reconstitution: a posteriori assignment of projection directions for 3D reconstruction. Ultramicroscopy 21(1987) 111-124.
Van Heel M: Classification of very large electron microscopical image data sets, Optik 82 (1989) 114-126.
Van Heel M, Schatz M, Orlova EV, Correlation functions revisited, Ultramicroscopy 46 (1992) 304-316.
Van Heel M, Harauz G, Orlova EV, Schmidt R, Schatz M: A new generation of the IMAGIC image processing system. J. Struct. BioL 116 (1996) 17-24.
Van Heel M, Gowen B, Matadeen R, Orlova EV, Finn R, Pape T, Cohen D, Stark H, Schmidt R, Schatz M, Patwardhan A: Single-particle cryo electron microscopy: towards atomic resolution, Quart. Rev. Biophys. 33 (2000) 307-369.
Ban N, Nissen P, Hansen J, Moore PB, Steitz TA: The complete atomic structure of the large ribosomal subunit at 2.4 Å resolution. Science 289 (2000) 905-920.
Wang B-C: Resolution of phase ambiguity in macromolecular crystallography. Methods in Enzymology 115 (1985) 148-157.
Schluenzen F, Tocilj A, Zarivach R, Harms J, Gluehmann M, Janell D, Bashan A, Bartels H, Agmon I, Franceschi F, Yonath A: Structure of functionally activated small ribosomal subunit at 3.3 Å resolution. Cell 102 (2000) 615-623.
Wimberly BT, Brodersen DE, Clemons WM, Morgan-Warren, R. J., Carter, A. P., Vonrhein C, Hartsch T, Ramakrishnan V: The structure of the 30 S ribosomal subunit. Nature 407 (2000) 327-339.
Zemlin F, Beckmann E, van der Mast KD: A 200 Kv electron microscope with Schottky field emitter and a helium-cooled super-conducting objective lens. Ultramicroscopy 3 (1996) 227-238.

Input for the solvent flattening procedures are: 1) experimental 3D amplitudes to high resolution; 2) a 3D mask defining the outer contour of the molecule that separates it from the "solvent"; 3) a 3D map with reliable phases up to a resolution lower than that of the diffraction amplitude data. The procedure entails:
(E) Impose the 3D mask onto the medium-resolution input 3D map in order to suppress the residual modulations present in the solvent area.
(B) After 3D Fourier transforming (3D-FFT) the masked map, the phases in the resulting transform are consistent with the limited extent of the object (and so are the discarded amplitudes).
(C) Merge the new phases with the original (experimental) input 3D amplitudes to form a hybrid Fourier map.
(D) 3D-Fourier transform the hybrid Fourier map back to real space.
(E) If convergence criteria are not fulfilled, re-enter the refined real-space map into the process (A).

### APPENDIX 2

### Phase extension of 50S ribosomal Subunits

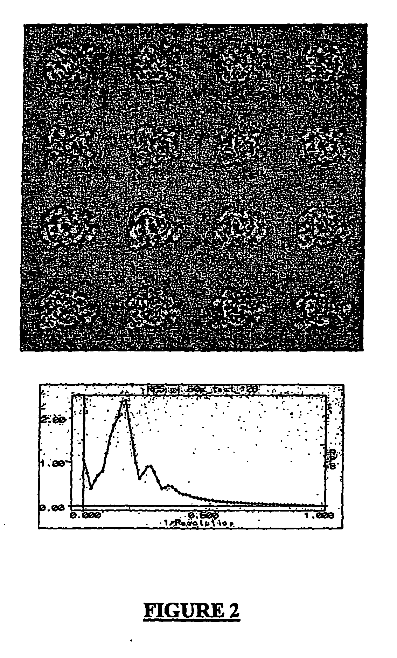

See Figure 2 (A) Sections from a 3D reconstruction of the 50S ribosomal subunit of *E. coli,* calculated using the dataset of [Matadeen *et al.,* 1999]. This map is used as a test object for a solvent-flattening experiment for asymmetrical particles. The curve illustrates the rotational averaged power spectrum distribution of this test object.

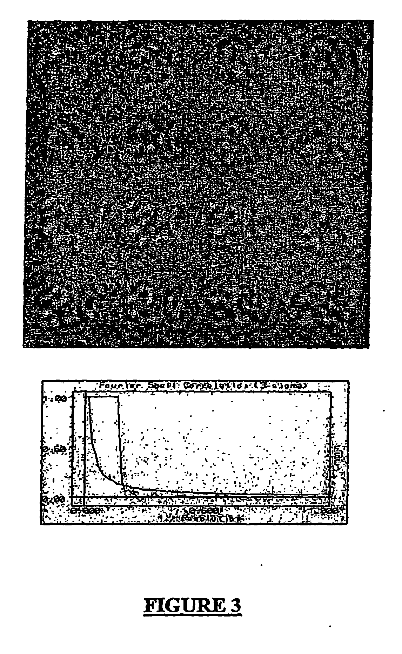

See Figure 3 (B) Low-pass filtered (hard spherical mask to 0.15 times the Nyquist frequency) version of input image used as starting point for the solvent-flattening test. The Fourier Shell Correlation [Harauz & van Heel, 1986; Orlova *et al.,* 1996] between the test object (A) and the filtered starting model reflects the sharp Fourier-space mask.

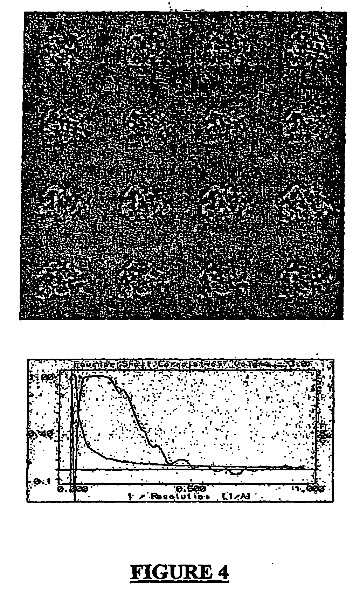

See Figure 4 (C) Using a few hundred iterations of the algorithm depicted in APPENDIX 1, a significant part of the low-resolution phases could be restored. The total variance represented in the high-frequency data components that have not reached statistical significance represents less than a few percent of the total variance in the original map.

### APPENDIX 3

### Creating phases from random noise

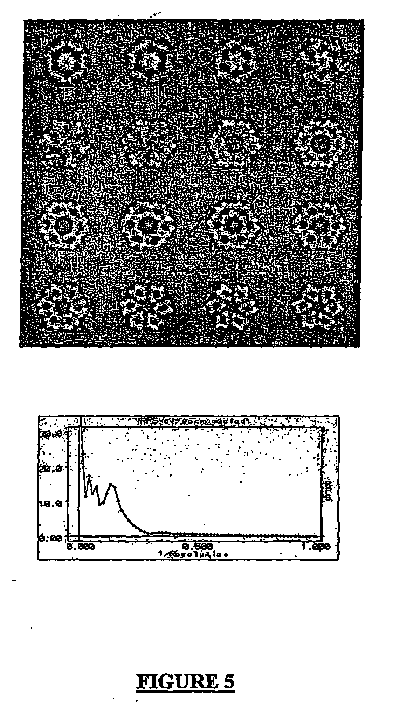

See Figure 5 (A) A 3D reconstruction of the giant hemoglobin of *Lumbricus terrestris* [van Heel *et al.,* 2000] is used as a test object for solvent flattening. "Worm hemoglobin" has D6 pointgroup symmetry; only some sections of the 128³ map are depicted. The molecule occupies less than 15% of the available 3D volume; its rotational power spectrum distribution is depicted in the curve in arbitrary units.

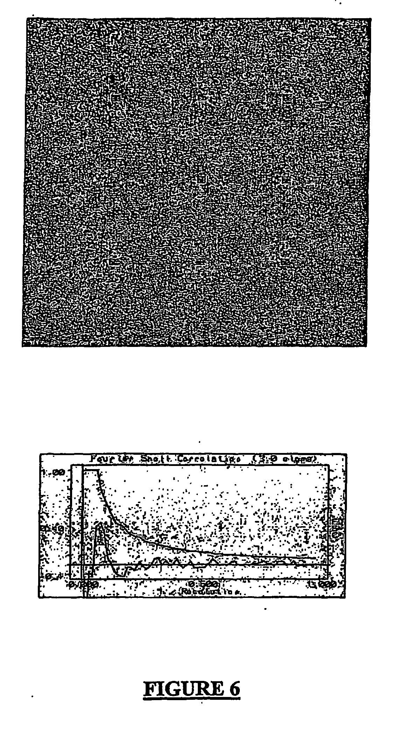

See Figure 6 (B) Starting model for phasing: random noise density with imposed D6 symmetry. The Fourier Shell Correlation [Harauz & van Heel, 1986] between the test object (A) and this symmetrised random noise starting model obviously shows no correlations above the 3-σ significance curve. The low-resolution statistical fluctuations are larger due to the smaller number of "voxels" in the low-resolution shells close to the origin.

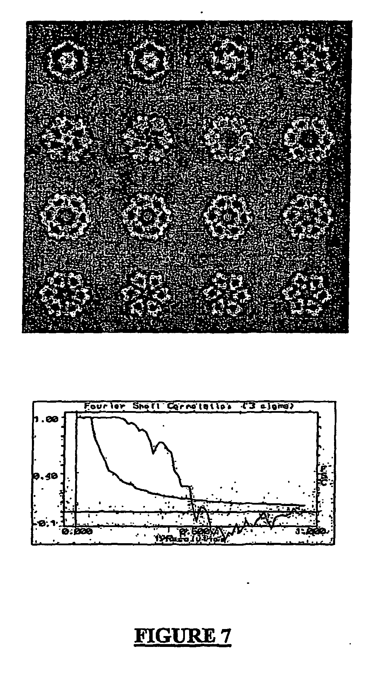

See Figure 7 (C) Regeneration of the original phases is illustrated in the sections shown here and in the FSC between the original map and the phase-extended map. The map was inverted in contrast since the iterative algorithm had flipped the contrast (the inverse of a map has the same amplitude spectrum).

### APPENDIX 4

### Creating phases from random noise: first experimental results

See Figure 8. Stereo views of a first 3D reconstruction of the 70S Ribosome of *E. coli* termination complex (the bacterial ribosome in complex with release factor 2), is based entirely on experimental amplitude information and the availability of a mask. The amplitude information was collected in the spatial domain in the form of a three-dimensional Self-Correlation-Function [van Heel *el al.,* 1992]. The mask was generated around a preliminary three-dimensional reconstruction of this ribosome based of conventional approaches [van Heel *et al.* 2000] based on the local variance technique. New convergence methods have been applied as described in the main text to generate this reconstruction based of the amplitude information.

## Claims

1. A method of creating a three-dimensional image of a single-particle object comprising the steps of
observing projection images of said object to form source image data;
transforming said source image data to the frequency domain to form source image amplitude information and source image phase information;
applying a mask defined by mask information to a working image of said object within a reconstruction volume in the spatial domain to remove portions of said working image outside of said mask, said mask corresponding to an estimated three-dimensional outline of said object and said reconstruction volume having a maximum size unconstrained by said object;
transforming said masked working image to the frequency domain to form generated amplitude and phase information representing said masked working image;
merging said source image amplitude information with said generated phase information to form an updated working image in the frequency domain;
transforming said updated working image back to said reconstruction volume within the spatial domain; and
repeating said applying and subsequent steps upon said updated working image until convergence criteria are met;
wherein said mask is formed by identifying those portions of said working image having a local variance within a relevant spatial frequency range and above a threshold level.

2. A method as claimed in claim 1, wherein said object is one of:
a molecule;
a macromolecule; and
a macromolecular complex.

3. A method as claimed in claim 1, wherein said object is embedded within a vitreous phase of fluid when it is subject to electron microscopy.

4. A method as claimed in any one of the preceding claims, wherein said source image amplitude information and said source image phase information is derived from combining source image data taken from a plurality of imaging operations performed upon said object.

5. A method as claimed in claim 4, wherein said plurality of imaging operations are performed upon different instances of said object.

6. A method as claimed in any one of claims 4 and 5, wherein said imaging operations are unfocused and destructive of said object.

7. A method as claimed in any one of the preceding claims, wherein said merging mixes said generated amplitude information with said source image amplitude information in forming said updated working image.

8. Apparatus for creating a three-dimensional image of a single-particle object from source image data formed from projection images of said object, said apparatus comprising data processing logic operable to:
transform said source image data to the frequency domain to form source image amplitude information and source image phase information;
apply a mask defined by mask information to a working image of said object within a reconstruction volume in the spatial domain to remove portions of said working image outside of said mask, said mask corresponding to an estimated three-dimensional outline of said object and said reconstruction volume having a maximum size unconstrained by said object;
transform said masked working image to the frequency domain to form generated amplitude and phase information representing said masked working image;
merge said source image amplitude information with said generated phase information to form an updated working image in the frequency domain;
transform said updated working image back to said reconstruction volume within the spatial domain; and
repeat said application and subsequent operations upon said updated working image until convergence criteria are met;
wherein said mask is formed by identifying those portions of said working image having a local variance within a relevant spatial frequency range and above a threshold level.

9. Apparatus as claimed in claim 8, wherein said object is one of:
a molecule;
a macromolecule; and
a macromolecular complex.

10. Apparatus as claimed in claim 8, wherein said object is embedded within a vitreous phase of fluid when it is subject to electron microscopy.

11. Apparatus as claimed in any one of claims 8 to 10, wherein said source image amplitude information and said source image phase information is derived from combining source image data taken from a plurality of imaging operations performed upon said object.

12. Apparatus as claimed in claim 11, wherein said plurality of imaging operations are performed upon different instances of said object.

13. Apparatus as claimed in any one of claims 11 and 12, wherein said imaging operations are unfocused and destructive of said object.

14. Apparatus as claimed in any one of claims 8 to 13, wherein said data processing logic is operable to mix said generated amplitude information with said source image amplitude information in forming said updated working image.

15. A computer program product for controlling a computer to create a three-dimensional image of a single-particle object from source image data formed from projection images of said object in accordance with the steps of:
transforming said source image data to the frequency domain to form source image amplitude information and source image phase information;
applying a mask defined by mask information to a working image of said object within reconstruction volume in the spatial domain to remove portions of said working image outside of said mask, said mask corresponding to an estimated three-dimensional outline of said object and said reconstruction volume having a maximum size unconstrained by said object;
transforming said masked working image to the frequency domain to form generated amplitude and phase information representing said masked working image;
merging said source image amplitude information with said generated phase information to form an updated working image in the frequency domain;
transforming said updated working image back to said reconstruction volume within the spatial domain; and
repeating said applying and subsequent steps upon said updated working image until convergence criteria are met;
wherein said mask is formed by identifying those portions of said working image having a local variance within a relevant spatial frequency range and above a threshold level.

16. A computer program product as claimed in claim 15, wherein said object is one of:
a molecule;
a macromolecule; and
a macromolecular complex.

17. A computer program product as claimed in claim 15, wherein said object is embedded within a vitreous phase of fluid when it is subject to electron microscopy.

18. A computer program product as claimed in any one of claims 15 to 17, wherein said source image amplitude information and said source image phase information is derived from combining source image data taken from a plurality of imaging operations performed upon said object.

19. A computer program product as claimed in claim 18, wherein said plurality of imaging operations are performed upon different instances of said object.

20. A computer program product as claimed in any one of claims 18 and 19, wherein said imaging operations are unfocused and destructive of said object.

21. A computer program product as claimed in any one of claims 15 to 20, said merging mixes said generated amplitude information with said source image amplitude information in forming said updated working image.

## Patentansprüche

1. Verfahren zur Herstellung eines dreidimensionalen Bildes eines Einzelpartikel-Objekts, umfassend die Schritte:
Beobachten von Projektionsbildern des Objekts zur Bildung von Quellbilddaten;
Umwandeln der Bildquellendaten in den Frequenzbereich zur Bildung von Quellbild-Amplitudeninformationen und -Phaseninformationen;
Anwenden einer durch Maskierungsinformationen definierten Maske auf ein Arbeitsbild des Objekts innerhalb eines Rekonstruktionsvolumens im Raumbereich, um Teile des Arbeitsbildes außerhalb der Maske zu entfernen, wobei die Maske einem geschätzten dreidimensionalen Grundriss des Objekts entspricht und das Rekonstruktionsvolumen eine vom Objekt uneingeschränkte maximale Größe aufweist;
Umwandeln des maskierten Arbeitsbildes in den Frequenzbereich zur Bildung von generierten Amplituden- und Phaseninformationen, die das maskierte Arbeitsbild repräsentieren;
Zusammenführen der Quellbild-Amplitudeninformationen mit den generierten Phaseninformationen zur Bildung eines aktualisierten Arbeitsbildes im Frequenzbereich;
Rückwandeln des aktualisierten Arbeitsbildes in das Rekonstruktionsvolumen innerhalb des Raumbereiches; und
Wiederholen des Anwendens und der darauffolgenden Schritte beim aktualisierten Arbeitsbild, bis die Konvergenzkriterien erfüllt sind;
wobei die Maske durch Identifizieren jener Teile des Arbeitsbildes gebildet wird, die eine lokale Varianz innerhalb eines relevanten Raumfrequenzbereichs und über einem Schwellenwert aufweisen.

2. Verfahren nach Anspruch 1, wobei das Objekt entweder
ein Molekül;
ein Makromolekül; oder
ein makromolekularer Komplex
ist.

3. Verfahren nach Anspruch 1, wobei das Objekt in einer glasartigen Fluidphase eingebettet ist, wenn es einer Elektronenmikroskopie ausgesetzt wird.

4. Verfahren nach einem der vorangehenden Ansprüche, wobei die Quellbild-Amplitudeninformationen und -Phaseninformationen über die Bildquelle von der Kombination der Quellbilddaten abgeleitet werden, wobei die Daten aus einer Vielzahl von bildgebenden Arbeitsvorgängen, die bei diesem Objekt durchgeführt wurden, genommen werden.

5. Verfahren nach Anspruch 4, wobei die Vielzahl an bildgebenden Arbeitsvorgängen bei unterschiedlichen Beispielen des Objekts durchgeführt wird.

6. Verfahren nach einem der Ansprüche 4 oder 5, wobei die bildgebenden Arbeitsvorgänge nicht fokussiert und für das Objekt zerstörerisch sind.

7. Verfahren nach einem der vorangehenden Ansprüche, wobei beim Zusammenführen die generierten Amplitudeninformationen mit den Quellbild-Amplitudeninformationen bei der Bildung des aktualisierten Arbeitsbildes vermischt werden.

8. Vorrichtung zur Herstellung eines dreidimensionalen Bildes eines Einzelpartikel-Objekts aus Quellbilddaten, die aus Projektionsbildern des Objekts gebildet wurden, wobei die Vorrichtung eine Datenverarbeitungslogik umfasst, die funktionsfähig ist:
die Quellbilddaten in den Frequenzbereich zur Bildung von Quellbild-Amplitudeninformationen und von -Phaseninformationen umzuwandeln;
eine durch Maskierungsinformationen definierte Maske auf einem Arbeitsbild des Objekts innerhalb eines Rekonstruktionsvolumens im Raumbereich anzuwenden, um Teile des Arbeitsbildes außerhalb der Maske zu entfernen, wobei die Maske einem geschätzten dreidimensionalen Grundriss des Objekts entspricht und das Rekonstruktionsvolumen eine vom Objekt uneingeschränkte maximale Größe aufweist;
das maskierte Arbeitsbild in den Frequenzbereich zur Bildung von generierten Amplituden- und Phaseninformationen umzuwandeln, die das maskierte Arbeitsbild repräsentieren;
die Quellbild-Amplitudeninformationen mit den generierten Phaseninformationen zur Bildung eines aktualisierten Arbeitsbildes im Frequenzbereich zusammenzuführen;
das aktualisierte Arbeitsbild in das Rekonstruktionsvolumen innerhalb des Raumbereiches rückzuwandeln; und
das Anwenden und die darauffolgenden Schritte beim aktualisierten Arbeitsbild zu wiederholen, bis die Konvergenzkriterien erfüllt sind;
wobei die Maske durch Identifizieren jener Teile des Arbeitsbildes gebildet wird, die eine lokale Varianz innerhalb eines relevanten Raumfrequenzbereichs und über einem Schwellenwert aufweisen.

9. Vorrichtung nach Anspruch 8, wobei das Objekt entweder:
ein Molekül;
ein Makromolekül; oder
ein makromolekularer Komplex
ist.

10. Vorrichtung nach Anspruch 8, wobei das Objekt in eine glasartige Fluidphase eingebettet ist, wenn es einer Elektronenmikroskopie ausgesetzt wird.

11. Vorrichtung nach einem der Ansprüche 8 bis 10, wobei die Quellbild-Amplitudeninformationen und -Phaseninformationen über die Bildquelle von der Kombination der Quellbilddaten abgeleitet werden, wobei die Daten aus einer Vielzahl von bildgebenden Arbeitsvorgängen, die bei diesem Objekt durchgeführt wurden, genommen werden.

12. Vorrichtung nach Anspruch 11, wobei die Vielzahl von bildgebenden Arbeitsvorgängen bei unterschiedlichen Beispielen des Objekts durchgeführt wird.

13. Vorrichtung nach einem der Ansprüche 11 und 12, wobei die bildgebenden Arbeitsvorgänge nicht fokussiert und für das Objekt zerstörerisch sind.

14. Vorrichtung nach einem der Ansprüche 8 bis 13, wobei die Datenverarbeitungslogik funktionsfähig ist, die generierten Amplitudeninformationen mit den Quellbild-Amplitudeninformationen bei der Bildung des aktualisierten Arbeitsbildes zu vermischen.

15. Computerprogramm zum Steuern eines Computers zur Herstellung eines dreidimensionalen Bildes eines Einzelpartikel-Objekts aus den Quellbilddaten, die aus den Projektionsbildern des Objekts gebildet wurden, gemäß den Schritten:
Umwandeln der Quellbilddaten in den Frequenzbereich zur Bildung von Quellbild-Amplitudeninformationen und -Phaseninformationen;
Anwenden einer durch Maskierungsinformationen definierten Maske auf ein Arbeitsbild des Objekts innerhalb eines Rekonstruktionsvolumens im Raumbereich, um Teile des Arbeitsbildes außerhalb der Maske zu entfernen, wobei die Maske einem geschätzten dreidimensionalen Grundriss des Objekts entspricht und das Rekonstruktionsvolumen eine vom Objekt uneingeschränkte maximale Größe aufweist;
Umwandeln des maskierten Arbeitsbildes in den Frequenzbereich zur Bildung von generierten Amplituden- und Phaseninformationen, die das maskierte Arbeitsbild repräsentieren;
Zusammenführen der Quellbild-Amplitudeninformationen mit den generierten Phaseninformationen zur Bildung eines aktualisierten Arbeitsbildes im Frequenzbereich;
Rückwandeln des aktualisierten Arbeitsbildes in das Rekonstruktionsvolumen innerhalb des Raumbereiches; und
Wiederholen des Anwendens und der darauffolgenden Schritte beim aktualisierten Arbeitsbild, bis die Konvergenzkriterien erfüllt sind;
wobei die Maske durch Identifizieren jener Teile des Arbeitsbildes gebildet wird, die eine lokale Varianz innerhalb eines relevanten Raumfrequenzbereichs und über einem Schwellenwert aufweisen.

16. Computerprogramm nach Anspruch 15, wobei das Objekt entweder:
ein Molekül;
ein Makromolekül; oder
ein makromolekularer Komplex
ist.

17. Computerprogramm nach Anspruch 15, wobei das Objekt in einer glasartigen Fluidphase eingebettet ist, wenn es einer Elektronenmikroskopie ausgesetzt wird.

18. Computerprogramm nach einem der Ansprüche 15 bis 17, wobei die Quellbild-Amplitudeninformationen und -Phaseninformationen über die Bildquelle von der Kombination der Quellbilddaten abgeleitet werden, wobei die Daten aus einer Vielzahl von bildgebenden Arbeitsvorgängen, die bei diesem Objekt durchgeführt wurden, genommen werden.

19. Computerprogramm nach Anspruch 18, wobei die Vielzahl von bildgebenden Arbeitsvorgängen bei unterschiedlichen Beispielen des Objekts durchgeführt wird.

20. Computerprogramm nach einem der Ansprüche 18 und 19, wobei die bildgebenden Arbeitsvorgänge nicht fokussiert und für das Objekt zerstörerisch sind.

21. Computerprogramm nach einem der Ansprüche 15 bis 20, wobei beim Zusammenführen die generierten Amplitudeninformationen mit den Quellbild-Amplitudeninformationen bei der Bildung des aktualisierten Arbeitsbildes vermischt werden.

## Revendications

1. Procédé de création d'une image tridimensionnelle d'un objet d'une seule particule comprenant les étapes de :
observation d'images de projection dudit objet pour former des données d'image source ;
transformation desdites données d'image source dans le domaine des fréquences pour former des informations d'amplitude d'image source et des informations de phase d'image source ;
application d'un masque défini par des informations de masque à une image de travail dudit objet à l'intérieur d'un volume de reconstruction dans le domaine spatial pour éliminer des parties de ladite image de travail situées à l'extérieur dudit masque, ledit masque correspondant à un contour tridimensionnel estimé dudit objet et ledit volume de reconstruction ayant une taille maximum non contrainte par ledit objet ;
transformation de ladite image de travail masquée dans le domaine des fréquences pour former des informations d'amplitude et de phase générées représentant ladite image de travail masquée ;
fusionnement desdites informations d'amplitude d'image source avec lesdites informations de phase générées pour former une image de travail mise à jour dans le domaine des fréquences ;
retransformation de ladite image de travail mise à jour en ledit volume de reconstruction à l'intérieur du domaine spatial ; et
répétition desdites étapes d'application et suivantes sur ladite image de travail mise à jour jusqu'à ce que des critères de convergence soient satisfaits ;
**caractérisé en ce que** ledit masque est formé par identification des parties de ladite image de travail qui ont une variance locale se situant à l'intérieur d'une gamme de fréquences spatiales pertinente et au-dessus d'un niveau de seuil.

2. Procédé selon la revendication 1, **caractérisé en ce que** ledit objet est l'un :
d'une molécule ;
d'une macromolécule ; et
d'un complexe macromoléculaire.

3. Procédé selon la revendication 1, **caractérisé en ce que** ledit objet est noyé dans une phase vitreuse d'un fluide lorsqu'il est soumis à la microscopie électronique.

4. Procédé selon l'une quelconque des revendications précédentes, **caractérisé en ce que** lesdites informations d'amplitude d'image source et lesdites informations de phase d'image source sont déduites de la combinaison de données d'image source obtenues à partir d'une pluralité d'opérations de formation d'image effectuées sur ledit objet.

5. Procédé selon la revendication 4, **caractérisé en ce que** ladite pluralité d'opérations de formation d'image sont effectuées sur des instanciations différentes dudit objet.

6. Procédé selon l'une quelconque des revendications 4 et 5, **caractérisé en ce que** lesdites opérations de formation d'image sont non focalisées et non destructives pour ledit objet.

7. Procédé selon l'une quelconque des revendications précédentes, **caractérisé en ce que** ledit fusionnement mélange lesdites informations d'amplitude générées auxdites informations d'amplitude d'image source formant ladite image de travail mise à jour.

8. Appareil pour créer une image tridimensionnelle d'un objet d'une seule particule à partir de données d'image source formées à partir d'images de projection dudit objet, ledit appareil comprenant une logique de traitement de données ayant pour fonction de :
transformer lesdites données d'image source dans le domaine des fréquences afin de former des informations d'amplitude d'image source et des informations de phase d'image source ;
appliquer un masque défini par des informations de masque à une image de travail dudit objet à l'intérieur d'un volume de reconstruction dans le domaine spatial pour éliminer des parties de ladite image de travail situées à l'extérieur dudit masque, ledit masque correspondant à un contour tridimensionnel estimé dudit objet et ledit volume de reconstruction ayant une taille maximum non contrainte par ledit objet ;
transformer ladite image de travail masquée dans le domaine des fréquences pour former des informations d'amplitude et de phase générées représentant ladite image de travail masquée ;
fusionner lesdites informations d'amplitude d'image source avec lesdites informations de phase générées afin de former une image de travail mise à jour dans le domaine des fréquences ;
retransformer ladite image de travail mise à jour en ledit volume de reconstruction dans le domaine spatial ; et
répéter lesdites étapes d'application et suivantes sur ladite image de travail mise à jour jusqu'à ce que des critères de convergence soient satisfaits ;
**caractérisé en ce que** ledit masque est formé en identifiant les parties de ladite image de travail ayant une variance locale se situant dans un domaine de fréquences spatiales pertinent et au-dessus d'un niveau de seuil.

9. Appareil selon la revendication 8, **caractérisé en ce que** ledit objet est l'un :
d'une molécule ;
d'une macromolécule ; et
d'un complexe macromoléculaire.

10. Appareil selon la revendication 8, **caractérisé en ce que** ledit objet est noyé dans une phase vitreuse d'un fluide lorsqu'il est soumis à la microscopie électronique.

11. Appareil selon l'une quelconque des revendications 8 à 10, **caractérisé en ce que** lesdites informations d'amplitude d'image source et lesdites informations de phase d'image source sont déduites de la combinaison de données d'image source obtenues à partir d'une pluralité d'opérations de formation d'image effectuées sur ledit objet.

12. Appareil selon la revendication 11, **caractérisé en ce que** ladite pluralité d'opérations de formation d'image sont effectuées sur des instanciations différentes dudit objet.

13. Appareil selon l'une quelconque des revendications 11 et 12, **caractérisé en ce que** lesdites opérations de formation d'image sont non focalisées et non destructives pour ledit objet.

14. Appareil selon l'une quelconque des revendications 8 à 13, **caractérisé en ce que** ladite logique de traitement des données a pour fonction de mélanger lesdites informations d'amplitude générées auxdites informations d'amplitude d'image source lors de la formation de ladite image de travail mise à jour.

15. Produit à base de programme informatique pour commander un ordinateur afin qu'il crée une image tridimensionnelle d'un objet d'une seule particule à partir de données d'image source formées à partir d'images de projection dudit objet par les étapes de :
transformation desdites données d'image source dans le domaine des fréquences pour former des informations d'amplitude d'image source et des informations de phase d'image source ;
application d'un masque défini par des informations de masque à une image de travail dudit objet à l'intérieur d'un volume de reconstruction dans le domaine spatial pour éliminer des parties de ladite image de travail situées à l'extérieur dudit masque, ledit masque correspondant à un contour tridimensionnel estimé dudit objet et ledit volume de reconstruction ayant une taille maximum non contrainte par ledit objet ;
transformation de ladite image de travail masquée dans le domaine des fréquences pour former des informations d'amplitude et de phase générées représentant ladite image de travail masquée ;
fusionnement desdites informations d'amplitude d'image source avec lesdites informations de phase générées pour former une image de travail mise à jour dans le domaine des fréquences ;
retransformation de ladite image de travail mise à jour en ledit volume de reconstruction à l'intérieur du domaine spatial ; et
répétition desdites étapes d'application et suivantes sur ladite image de travail mise à jour jusqu'à ce que des critères de convergence soient satisfaits ;
**caractérisé en ce que** ledit masque est formé par identification des parties de ladite image de travail qui ont une variance locale se situant à l'intérieur à l'intérieur d'une gamme de fréquences spatiales pertinente et au-dessus d'un niveau de seuil.

16. Produit à base de programme informatique selon la revendication 15, **caractérisé en ce que** ledit objet est l'un :
d'une molécule ;
d'une macromolécule ; et
d'un complexe macromoléculaire.

17. Produit à base de programme informatique selon la revendication 15, **caractérisé en ce que** ledit objet est noyé dans une phase vitreuse d'un fluide lorsqu'il est soumis à la microscopie électronique.

18. Produit à base de programme informatique selon l'une quelconque des revendications 15 à 17, **caractérisé en ce que** lesdites informations d'amplitude d'image source et lesdites informations de phase d'image source sont déduites de la combinaison de données d'image source obtenues à partir d'une pluralité d'opérations de formation d'image effectuées sur ledit objet.

19. Produit à base de programme informatique selon la revendication 18, **caractérisé en ce que** ladite pluralité d'opérations de formation d'image sont effectuées sur des instanciations différentes dudit objet.

20. Produit à base de programme informatique selon l'une quelconque des revendications 18 et 19, **caractérisé en ce que** lesdites opérations de formation d'image sont non focalisées et non destructives pour ledit objet.

21. Produit à base de programme informatique selon l'une quelconque des revendications 15 à 20, **caractérisé en ce que** ledit fusionnement mélange lesdites informations d'amplitude générées auxdites informations d'amplitude d'image source formant ladite image de travail mise à jour.
